# FASCICULE DE BREVET EUROPEEN

(11) **EP 2 903 411 B1**
(45) Date de publication et mention de la délivrance du brevet: **03.04.2019**
(21) Numéro de dépôt: 13782784.6
(22) Date de dépôt: 02.10.2013
(51) Int. Cl.: A01G 27/06, A01G 27/04

(54) **SYSTEME DE BAC A RESERVE D'EAU FAVORABLE A L'AUTOREGULATION HYDRIQUE DES PLANTES**
RINNENSYSTEM MIT WASSERRESERVOIR FÜR PFLANZEN ZUR SELBSTREGELUNG DER WASSERAUFNAHME
TROUGH SYSTEM WITH WATER RESERVOIR ENCOURAGING PLANTS TO SELF-REGULATE WATER UPTAKE

(30) Priorité: 02.10.2012 FR 1259337; 27.09.2013 FR 1359370
(43) Date de publication de la demande: 12.08.2015
(73) Titulaire: Lestelle, Dominique, 75005 Paris (FR)
(72) Inventeur: Lestelle, Dominique, 75005 Paris (FR)
(74) Mandataire: Cabinet Camus Lebkiri
(86) Numéro de dépôt international: PCT/FR2013/052347
(87) Numéro de publication internationale: WO 2014/053775

(56) Documents cités:
- EP-A1- 0 515 207
- D. Lestelle: "Dromobac", Dépliant distribué au concours Lepine de la foire de Paris en avril 2012. , avril 2012 (2012-04), XP002698751, . Extrait de l'Internet: URL:www.dromobac.fr [extrait le 2013-06-14]

## Description

L'invention concerne un système de bac à réserve d'eau pour plantes cultivées hors sol, dans des conteneurs, pots ou bacs non reliés à une canalisation d'alimentation en eau. Le milieu de culture où se trouvent les racines ne bénéficie donc plus des équilibres hydriques que tend à maintenir la pleine terre, sur laquelle se fondent les autorégulations hydriques des plantes. En effet, lorsque les radicelles ont asséché les éléments de sol qui les entourent, ces éléments se réhydratent lentement par équilibre hydrique avec les éléments de sol voisins, et ainsi de proche en proche.

Ce phénomène conduit, en pleine terre et hors périodes de sécheresse exceptionnelle, à une diminution lente de la teneur en eau du sol, ce qui laisse le temps à la plante de mettre en place sa propre autorégulation hydrique (ralentissement de l'évaporation, puis ralentissement de la croissance et autres mécanismes connus de l'homme du métier). Pour une culture hors sol, ce phénomène d'équilibre hydrique n'existe pratiquement plus, sauf si le conteneur a des dimensions importantes vis-à-vis du volume occupé par les racines de l'ensemble des plantes qui y vivent.

Les bacs à réserve d'eau existants visent simplement à assurer un approvisionnement en eau, de préférence à un niveau élevé car il est connu que l'eau est le premier engrais des plantes à condition de ne pas dépasser le seuil au-delà duquel la putréfaction s'installe. Ils ne visent en aucun cas à ralentir le dessèchement des sols afin de laisser le temps aux mécanismes d'autorégulation des plantes de s'y adapter.

Ces bacs existants découlent d'inventions américaines des tous débuts du XIXè siècle, commercialisées ultérieurement par *Earthbox™* et *Growbox™.*

La forme la plus répandue reste le bac à réserve d'eau perfectionné et breveté par Marcel Ferrand en 1955 et qui a donné lieu aux certificats d'addition FR70088D 1956102656, FR71962 19570228. Dans ses réalisations actuellement commercialisées, ce bac comporte un conteneur à double fond, présentant un compartiment inférieur renfermant une réserve d'eau et un compartiment supérieur contenant la terre de culture. L'eau remonte du compartiment inférieur par un élément capillaire textile, longiligne et souple (tresse ou ruban tissé) parcourant le fond du compartiment supérieur sur presque toute sa plus grande longueur, et dont les extrémités plongent dans la réserve d'eau du compartiment inférieur. Cet élément capillaire ne dispose d'aucune capacité propre de rétention. Il aspire et restitue l'eau de la réserve en fonction de l'assèchement de sa portion en contact hydrique avec la terre. Il est généralement surdimensionné, de manière à ce que la terre soit quasi saturée en eau car cette dernière est considérée par les jardiniers comme le premier engrais des plantes. Toutefois un excès d'eau est préjudiciable car il génère une anoxie et des attaques cryptogamiques ou bactériennes conduisant à un pourrissement des racines. Cela pose problème car de la saturation à l'excès, la limite est vite franchie. Si l'utilisateur a manqué de vigilance dans le remplissage de la réserve ou si le bac est placé à l'extérieur et reçoit la pluie, l'eau en excès entraine des conséquences souvent fatales pour les plantes et très difficiles à éradiquer pour le bac de culture, au point qu'il est généralement plus simple de le détruire.

D'autre part, un perfectionnement de cette technique ménage des fentes d'aération pour les racines. Mais celles-ci-en profitent pour atteindre directement l'eau de la réserve, ce qui aggrave très fortement deux types de problèmes.

Le premier type de problèmes un risque accru de pourrissement ou d'attaques cryptogamiques ou bactériennes pour ces racines. Afin de remédier à cela, la dernière réalisation revendiquée par la marque Riviera™ prévoit l'alimentation en eau par un tissu capillaire posé sur une grille et conçu pour ne pas être traversée par les racines. Pourtant de nombreux utilisateurs m'ont affirmé que, selon leur expérience, la pourriture s'installait toujours facilement dans les racines. D'autres utilisateurs m'ont affirmé que les racines de leurs plantes avaient transpercé le tissu capillaire en question, et plongeaient dans la réserve d'eau.

Le second type de problèmes vient de ce que la plongée directe des racines dans l'eau de la réserve aggrave au maximum l'assèchement brutal qu'elles subissent entre l'état où la réserve d'eau est pleine (hygrométrie 100%) et l'état où elle est vide (hygrométrie 0%). Si cette plongée dans la réserve ne concerne qu'un faible nombre de racines, la plante subit un choc hydrique violent mais surmontable, au prix de la mort des racines concernées. Si cela concerne une majorité de racines, c'est la survie de la plante qui est en jeu.

L'assèchement rapide de la terre lorsque la réserve d'eau est finie constitue le problème clef des bacs à réserve d'eau, et il est d'autant plus pénalisant que le volume racinaire de la plante occupe une large proportion du volume total de la terre du bac. Ce volume de terre ne peut se recharger du fait de son isolement de tout autre milieu humide, alors que les plantes ont, jusqu'à la dernière goutte de cette réserve, une consommation maximale puisque rien ne les alerte sur la raréfaction de la ressource. Lorsque la réserve est tarie, cette consommation maximale épuise très rapidement l'humidité existant dans la terre, de qu'elle chute très brusquement. Ce premier stress hydrique place la plante en position de faiblesse. Mais son réflexe naturel consiste à mobiliser toute son énergie pour augmenter sa tension de succion afin de faire monter de l'eau piégée par capillarité dans des interstices plus petits. Sur une petite quantité de terre sèche, ce réflexe de survie n'apporte pas la quantité d'eau qu'il apporterait en pleine terre. L'épuisement des ressources de la plante est donc vain, et son réflexe de survie, du fait de l'inadaptation du bac, précipite le flétrissage et l'assèchement de la plante. Puisque dans ces bacs à réserve d'eau les réflexes de survie de la plante conduisent à précipiter sa mort, ils contrecarrent ces réflexes de survie.

Un autre type de dispositifs vise à l'alimentation en eau des cultures hors sol, en apportant aussi de l'eau par un élément capillaire, mais disposé à la surface de la terre et constitué de céramique poreuse, à travers laquelle l'eau s'écoule par gravité. Il est connu que la dimension des pores d'une telle céramique dépend des conditions de sa fabrication (taille de la poudre initiale, température et temps, pression). Ces conditions sont évidemment communes à tous les grains constituants l'objet en céramique, donc les pores ont par conséquent tous la même taille, notamment par la marque Aquasolo*™*qui utilise comme réservoir une bouteille d'eau minéral renversée. Cela permet de proposer au public différents débits d'eau avec des cônes de même épaisseur (5 mm environ) et de mêmes dimensions. Cette technique est illustrée par la demande de brevet FR 00109450 du 16/07/2001, d'Amsellem Maurice.

Une variante consiste à apporter de l'eau depuis un réservoir déporté de quelques décimètres (0,8 m pour la marque Blumat*™*, fabriquée en Autriche par Weninger Gmbh & co KG hag 7, A 6410 Telfs). Il communique par un cordon capillaire qui permet le remplissage de la céramique poreuse en forme de cône, enfoncée dans le terre ou le terreau du conteneur comme ci-dessus. Ses dimensions sont un peu plus petites : environ 22mm de diamètre pour 52mm de hauteur du cône, et une épaisseur de 3mm.

Toutefois, tous ces dispositifs d'arrosage des plantes par la surface du sol entrainent un surcroit d'évaporation rédhibitoire.

Seul le document DE 2009 007 415, semble faire une synthèse entre une réserve d'eau dans un compartiment en dessous, et montant par capillarité, et des céramiques poreuses. Il propose de placer des dispositifs capillaires, verticaux dont la base plonge dans un compartiment d'eau, et dont l'extrémité supérieure s'enfonce dans la terre pour y répartir l'eau. Celle-ci se trouve comme dans les dispositifs précédents aspirée et immédiatement redistribuée selon l'assèchement de la surface de contact entre le dispositif capillaire et la terre. Le problème auquel se sont attaché les inventeurs est la transmission intégrale et la bonne diffusion de l'eau dans la terre, avec le souci d'assurer un apport d'eau en quantité tant que le réservoir n'est pas vide. En cela, elle correspond bien à l'art antérieur que l'invention vise à améliorer. Dès que l'ensoleillement est fort, ce dispositif selon DE 2009 007 415 humidifie la terre sans restriction tant qu'il reste de l'eau dans le réservoir, et coupe brutalement cet apport d'eau lorsque celui-ci est vide.

Une variante est représentée par le document EP 0 515 207 déposé par Rentokill. L'eau monte de la réserve par un élément 12 présentant une porosité quelconque puisqu'elle peut être indifféremment du bois, du sable, de la brique ou une craie. Il est tout à fait étonnant que le dispositif fonctionne avec des matériaux dont la porosité, et éventuellement la capillarité bien que ce mot ne se lise pas, présentent des caractéristiques si diverses. En particulier, si on ne précise pas sa granulométrie, le sable est réputé pour ses propriétés drainantes, ce qui suppose que l'eau non seulement n'y monte pas mais descend selon la gravité : c'est son application essentielle dans le domaine technique du jardinage que l'inventeur ne peut ignorer. La porosité du bois est tout à l'inverse. Idem pour la brique qui n'est jamais utilisée comme un support drainant pour des plantes ou une terre végétale. Lorsque cet inventaire aux propriétés extrêmement diverses évoque de la craie, il semble ignorer qu'il y a une infinie variété de craies différentes ayant, malgré un même nom et des apparences assez proches, des propriétés hydriques extrêmement différentes. En l'absence de toute précision à ce sujet, on est tentés de prendre une craie banale, de caractéristiques hydriques moyennes parmi les craies les plus fréquentes, c'est-à-dire de ne considérer que son aptitude à faire monter de l'eau sur quelques cm. Plus généralement, il est clair qu'une invention qui s'accommode d'une si extrême diversité de porosité, et éventuellement de capillarité, n'utilise rien d'autre que la capacité du matériau à faire « buvard », à faire remonter de l'eau de quelques centimètres. Aucune autre propriété n'est mise en oeuvre dans le fonctionnement de cette invention, sans quoi elle caractériserait la porosité d'une manière qui exclurait certains matériaux de cette liste. Par ailleurs, cette remontée de l'eau n'est associée à aucune caractéristique permettant de diffuser l'eau à la terre. Cette incapacité de l'élément poreux 12 est compensée par l'ajout d'un insert 16 dont la fonction n'est pas très explicite. Globalement, ce document tente de généraliser les documents précédents en indiquant une liste de matériaux poreux extrêmement hétéroclite, qui de ce fait n'assure aucune autre fonction que celle des dispositifs précédents.

Les inventions selon l'art antérieur s'attachent donc à reproduire ou remplacer les soins d'un jardinier : approvisionner assez abondamment en eau la ou les plante(s), pour qu'elles puisent l'eau à satiété, et la diffuser aussi largement que possible dans la terre. Outre une consommation qui peut devenir prohibitive en été et pour certaines plantes, ces dispositifs ont en commun de ne prendre en compte que l'état où la réserve contient de l'eau. Aucun ne prend en compte le véritable problème des bacs à réserve d'eau : que se passe-t-il lorsque la réserve est vide ? Et comment évolue alors l'humidité dans le compartiment de la terre ?

C'est à cela que l'invention se propose de répondre.

### Exposé de l'invention

Le système de bac à réserve d'eau pour la culture des plantes selon l'invention permet aux plantes de détecter la raréfaction de l'eau et, grâce à une décroissance très lente de l'humidité de la terre, leur laisse le temps de s'auto adapter à cette raréfaction afin de prévenir la déshydratation.

Un but secondaire de l'invention est de limiter la consommation d'eau des plantes en s'appuyant sur leurs mécanismes d'autorégulation, auxquels elle permet d'agir efficacement, au lieu de les contrecarrer comme le font les bacs actuels une fois la réserve tarie. Pour cela, le système de l'invention sous alimente légèrement les plantes en eau, ce qui peut demander quelques jours d'adaptation constituant la méthode de culture associée, et fournit de l'eau aux racines des plantes d'une manière qui vise à reproduire la porosité de la pleine terre. Lorsque l'eau se raréfie, la plante doit faire monter sa tension de succion pour obtenir une réserve supplémentaire qui préserve son fonctionnement pendant le temps nécessaire à la mis en place de ses automatismes de régulation.

Le seuil de détection d'une raréfaction de la ressource en eau et le temps d'auto adaptation varient bien sûr selon la plante, le volume de terre dont elle dispose rapporté à son propre volume racinaire, et la nature de cette terre. Mais l'invention permet une grande souplesse d'adaptation à un grand nombre de plantes, de terre de culture et de niveaux d'ensoleillement.

Pour cela, l'invention propose un système de bac à réserve d'eau pour plantes comportant :
- un bac-conteneur (1) adapté à recevoir de l'eau et de la terre dans deux compartiments superposés, la partie inférieure de ce bac-conteneur (1) étant étanche car elle forme un compartiment inférieur(2) étanche, adapté pour recevoir de l'eau, alors que le compartiment supérieur (3) est adapté pour recevoir de la terre de culture
- une cloison (4) de séparation horizontale, placée dans le bac-conteneur (1) et constituant le fond du compartiment supérieur (3) adapté pour recevoir de la terre de culture
- au moins un élément (7) poreux capillaire plongeant dans la réserve d'eau par sa partie inférieure, et traversant la cloison (4) de séparation horizontale pour avoir à sa partie supérieure une surface (5) de contact avec la terre
- un conduit (12) permettant le remplissage de la réserve d'eau par le dessus sans mouiller la terre, dans lequel l'élément (7) poreux capillaire est constitué d'au moins un bloc massif en matériau capillaire tel que :
   - il a une largeur et une longueur dans un plan horizontal égales entre elles, et au moins égales à sensiblement le double de la hauteur du bloc (c'est ce que signifie le caractère « massif » de chaque bloc),
   - le matériau dans lequel est réalisé ce au moins un élément (7) est poreux capillaire, et présente une dispersion des diamètres intérieurs de ses pores répartie sur une large plage s'étendant de l'échelle de la centaine de micromètres (microns) à quelques dixièmes de µm, et une tortuosité qui ralentit la circulation des fluides dans ses pores,
   - l'ensemble de ce(s) au moins un élément(s) (7) poreux capillaire étant apte(s) à retenir par porosité et capillarité un volume d'eau au moins égal au soixantième du volume de terre du compartiment supérieur.

De manière particulièrement avantageuse, l'ensemble de ce(s) au moins un élément(s) (7) apte(s) à retenir par porosité et capillarité un volume d'eau, retient un volume d'eau au moins égal au trentième du volume de terre du compartiment supérieur.

De manière préférentielle, le système de bac à réserve d'eau pour plantes conforme à la revendication 1, a son au moins un élément (7) poreux capillaire en un matériau ayant une surface spécifique supérieure à 15m² par gramme.

On notera que l'appellation bac-conteneur, là où le langage vernaculaire utiliserait simplement « bac », vise à éviter toute possibilité de confusion entre l'ensemble du système de l'invention « système bac » et un de ses composants, le bac-conteneur qui n'est que le sous ensemble contenant les autres éléments.

On rappelle que la capacité d'un matériau poreux à stocker de l'eau se caractérise par sa porosité, c'est à dire le ratio entre le volume total des pores ouverts et le volume total de l'échantillon mesuré, cet échantillon étant supposé représentatif du matériau. Avantageusement, le matériau capillaire de l'invention a une porosité ouverte au moins égale à 0,3 (30%).

De manière très avantageuse, ce matériau capillaire a une capacité de retenir l'eau qui augmente à mesure que ce matériau sèche. Ainsi sa courbe de teneur en eau ne décroit pas linéairement dans le temps lors d'une phase de séchage à température ambiante constante et en l'absence de vent. Elle décroit d'abord rapidement, puis de plus en plus lentement pour devenir presque asymptotique lorsque le matériau est quasi sec. Finalement, elle finit par fluctuer avec l'humidité de l'air ambiant. Il semble extrêmement difficile d'obtenir son séchage complet, même dans des conditions de laboratoire.

Cette capacité à retenir l'eau découle habituellement de trois facteurs :
1- le premier, déjà cité, est la dispersion des diamètres intérieurs des pores répartie sur une large plage s'étendant de l'échelle de la centaine de micromètres (microns) à quelques dixièmes de µm ; ceci a pour conséquence que lorsqu'un diamètre de pores a été vidé de son eau, la plante doit augmenter sa tension de succion pour récupérer l'eau de pores plus petits, comme elle le fait en pleine terre ; ce processus permet à la plante de détecter la raréfaction de la ressource en eau, et donc de modifier progressivement son métabolisme hydrique, tout en disposant encore d'assez de réserve en eau pour avoir le temps de mettre en place ses autorégulations hydriques
2- préférentiellement, la surface spécifique, c'est à dire la surface intérieure de contact entre ce matériau et l'ensemble des cavités des pores pouvant contenir un fluide, doit être importante. Elle doit être supérieure à 15m² par gramme du matériau, et de préférence dépasser 20m² par gramme du matériau.
3- enfin de la tortuosité, c'est à dire de la succession non rectiligne de pores de différentes dimensions, communicant par des orifices de sections variées, font que « plus cette tortuosité est importante, plus la circulation des fluides est gênée » (cf. au Ch. 3 « La nature des dégradations des pierres en oeuvre » de l'Étude du Ministère Français de la Culture relative à la une dispersion des diamètres intérieurs des pores répartie sur une large plage s'étendant de l'échelle de la centaine de micromètres (microns) à quelques dixième de µm. conservation des pierres sur http://www.culture.gouv.fr/culture/conservation/fr/preventi/tuffeau/) Enfin, un quatrième facteur portant sur la capacité de rétention de l'eau porte non plus sur le matériau mais sur la forme qu'on lui donne. Afin de maximiser les effets de la tortuosité, l'élément capillaire a des dimensions les plus proches possibles d'un cube ou d'un cylindre un peu aplati. En pratique, cela signifie que cet élément a dans un plan horizontal une coupe polygonale (de préférence carrée) ou sensiblement circulaire dont le facteur de forme est inférieur à 1,5. Cela signifie soit que dans ce plan il n'a pas de plus grande dimension, soit que, s'il en a une, elle ne dépasse pas 1,5 fois sa plus petite dimension. Sa hauteur est avantageusement égale ou inférieure à sensiblement la moitié de sa plus grande dimension dans le plan horizontal. Elle est sensiblement égale à la hauteur de la réserve d'eau et de la couche d'air prévue au dessus (soit sensiblement 0,5 à 1 cm), plus l'épaisseur de la cloison (4) de séparation horizontale. A l'inverse du brevet DE 2009 007 415 qui poursuivait d'autres objectifs, il n'est pas avantageux dans l'invention que cet élément capillaire pénètre dans la terre car cela accroitrait sa surface de contact (5). Il est donc avantageusement tangent au fond du compartiment contenant la terre. Il peut également être un peu en retrait dans l'épaisseur de la cloison (4) de séparation horizontale.

Selon une autre caractéristique préférentielle cumulable avec toutes les précédentes, la valeur de la surface (5) de contact entre cet élément poreux et la terre du compartiment supérieur est sensiblement inférieure aux trois quarts de la valeur de la section horizontale que présente cet élément dans le compartiment inférieur (2). Il en résulte un épaulement qui peut servir d'appui mécanique à la cloison (4) de séparation horizontale supportant la terre du compartiment supérieur.

Avantageusement aussi, la section que présente le matériau capillaire dans le compartiment inférieur (2) est constante quelle que soit la hauteur considérée dans ce compartiment.

Selon une autre caractéristique avantageuse, cumulable avec toutes le précédentes, la surface (5) de contact entre l'élément poreux et la terre est réduite par application partielle sur une partie du matériau capillaire la constituant d'un matériau adhérent et faisant barrage au passage de l'eau. Cela peut être un vernis d'étanchéité, de l'huile de lin, du mastic silicone ou tout autre produit connu de l'homme du métier et compatible avec la culture des plantes.

Selon une variante cumulable avec toutes les autres, l'élément capillaire peut être composé de plusieurs blocs du même matériau ou de plusieurs matériaux capillaires dont l'ensemble est apte à retenir par capillarité un volume d'eau au moins égal au soixantième du volume de terre du compartiment supérieur. Dans ce cas, chacun de ces blocs à une forme se rapprochant d'un cube ou d'un cylindre aplati comme défini précédemment.

Selon une autre caractéristique avantageuse, cumulable avec toutes les autres, la paroi du compartiment supérieur (3) est étanche à l'humidité pour éviter un dessèchement inutile de la terre.

Pour les matériaux capillaires susceptibles de convenir à l'invention, il n'était pas possible d'utiliser les matériaux textiles ou des céramiques de l'art antérieur (les billes d'argile posent le même problème que les céramiques auxquelles elles sont apparentées). Les céramiques peuvent être réalisées industriellement à faible coût, avec des caractéristiques paramétrables et reproductibles. Mais leurs pores ont des diamètres comparables entre eux, ce qui favorise une restitution de toute l'eau pour une certaine tension de succion, ce qui est contraire aux buts de l'invention.

En outre, le matériau recherché doit transmettre l'eau sans permettre pour autant aux racines de le traverser.

Après de nombreux tâtonnements, les matériaux crayeux ont semblé réunir ces conditions. Après essais, seules des craies naturelle tendres à grain fin ont donné des résultats de grande qualité. Ils correspondent à :
- une porosité ouverte de 30 à 40%
- une distribution des diamètres des pores entre 1µm et 100µm, avec une majorité de pores entre 2 et 20µm afin que l'eau reste facilement utilisable, ce qui donne une coopération optimale avec la montée de la tension de succion de plusieurs types de plantes (géraniums, tagète, herbes aromatiques, tomates, cassis, petit mandarinier).
- une tortuosité reconnue qualitativement
- une surface spécifique de l'ordre de 20m² par gramme du matériau
- possibilité d'obtenir des formes pleines plus facilement et plus économiquement que les formes creuses (cônes) de l'art antérieur.

Le calcaire est connu pour sa bonne capacité de stockage de l'eau. Mais la thèse de David Dessandier « Etude du milieu poreux et des propriétés de transfert des fluides du Tuffeau blanc de Touraine. Application à la durabilité des pierres en oeuvre », Université de Tours 23 juin 1995 explique de manière très approfondie les propriétés très singulières de cette variété de Tuffeau, dont la structure macroscopique explique une prise d'eau rapide et poussée (prise d'eau massique 0,11<A<0,64 g/cm².(mn)^{1/2} très discriminante) et la structure microscopique (microporosité, tortuosité, microsphérules d'opale) expliquent la grande difficulté à relâcher l'eau absorbée. Il est connu que la cinétique d'évaporation d'une pierre poreuse est évaluée par son flux d'évaporation q_{ct} en fonction du temps, c'est-à-dire la dérivée en fonction du temps de la perte de masse hydrique. Cette grandeur s'exprime en grammes par cm² de surface d'évaporation et par heure. Pour le Tuffeau du Turonien, cette valeur est extrêmement lente, correspondant en moyenne à un flux d'évaporation q_{ct} de -1,6. 10-3 g/cm².h. La thèse souligne cette faible valeur en précisant que pour le calcaire du Turonien de Hontaria (Espagne), la valeur de q_{ct} est de -10,3. 10-3 g/cm².h, soit environ 6,5 fois plus. Or cette valeur est déterminante pour un bon fonctionnement de l'invention.

Après plusieurs essais, nous avons découvert qu'une caractéristique préférentielle de l'invention consiste à utiliser pour l'élément (7) poreux capillaire un matériau ayant un flux d'évaporation q_{ct} dont la valeur absolue est inférieure à : 2. 10⁻³ g/cm².h.

Le calcaire du Turonien, et plus précisément le Tuffeau, se distingue par sa plus grande capacité d'absorption d'eau, et surtout par sa capacité à la restituer d'autant plus difficilement que la réserve s'épuise. Cette caractéristique est plus efficacement assurée lorsqu'on réalise l'élément (7) poreux capillaire en un tuffeau ayant un flux d'évaporation q_{ct} dont la valeur absolue est inférieure à : 2. 10⁻³ g/cm².h. Les caractéristiques des pores et de leur distribution sont optimales, et la tortuosité s'avère élevée. Ce matériau correspond donc à une réalisation préférentielle de l'invention.

Pour ce point, le tuffeau du Turonien apparait comme la meilleure pierre calcaire selon le document BRGM/RP-50137-FR «Guide méthodologique de sélection des pierres des monuments en termes de durabilité et compatibilité », de D. Dessandier et al, décembre 2000. Il mentionne pour les deux échantillons de tuffeau une porosité de 49,7 et 46,5, et une surface spécifique de 22,2 et 14,6 m²/g. Ainsi le matériau capillaire selon l'invention est avantageusement du tuffeau, et préférentiellement du tuffeau du Turonien. Par ailleurs, Dans l'invention, c'est évidement l'accroissement de la tension de succion des plantes qui génère ce relargage.

D'une façon plus générale, le système de bac à réserve d'eau pour plantes comporte :
- un bac-conteneur (1) adapté à recevoir de l'eau et de la terre dans deux compartiments superposés, le fond de ce bac-conteneur étant étanche car il forme un compartiment inférieur(2) étanche, adapté pour recevoir de l'eau, alors que le compartiment supérieur est adapté pour recevoir de la terre de culture
- une cloison (4) de séparation horizontale, placée dans le bac-conteneur (1) et constituant le fond du compartiment supérieur (3) adapté pour recevoir de la terre de culture
- au moins un élément (7) poreux capillaire plongeant dans la réserve d'eau par sa partie inférieure, et traversant la cloison (4) de séparation horizontale pour avoir à sa partie supérieure une surface (5) de contact avec la terre
- un conduit (12) de remplissage de la réserve d'eau par le dessus, dans lequel l'élément (7) poreux capillaire est constitué d'au moins un bloc massif en matériau capillaire apte à faire monter du compartiment inférieur par capillarité lorsqu'il y a de l'eau dans la réserve, mais qui exerce, lorsque la réserve est vide, une rétention de l'eau qu'il renferme à mesure que celle-ci se raréfie.

Selon un mode de réalisation avantageux, compatible avec tous les autres modes, afin d'éviter que des racines ne shuntent le matériau capillaire en plongeant directement dans la réserve d'eau, la cloison (4) de séparation horizontale entre les deux compartiments n'est pas percée de trous et est fixée de manière à éviter les interstices. Toutefois, des tests ont montré que, même s'il en existe, peu de racines y sont attirées dès lors qu'elles trouvent à proximité l'élément en matériau (7) poreux capillaire, dont l'humidité varie très lentement.

Selon une variante dépendante de celle du paragraphe ci-dessus, lorsque cette cloison (4) horizontale de séparation entre les deux compartiments est dépourvue de trous, il est avantageux pour l'oxygénation des racines d'incruster dans son épaisseur une pastille (9) de matériau poreux non transperçable par les racines des plantes, et qui fait communiquer la terre avec la couche d'air surmontant la réserve d'eau. Cette pastille descend très peu en dessous de la cloison de séparation horizontale, afin de ne pas être mouillée lorsque la réserve d'eau est pleine, mais elle peut monter plus haut dans la terre du compartiment supérieur. Ce matériau poreux peut être du calcaire tendre, mais préférentiellement un matériau minéral rigide dont la porosité est plus importante comme la pierre ponce ou de roche volcaniques, pas nécessairement capillaires.
- le matériau poreux ayant une faible résilience, il est avantageusement séparé du fond du bac par au moins une couche capillaire et imputrescible comme le sont certains géotextiles, dont la compressibilité ou l'élasticité amortissent d'éventuels chocs
- dans le cadre de la revendication précédente, le matériau géotextile ou en microfibres imputrescibles déborde des contours du bloc poreux, afin de récupérer l'eau qui se trouverait piégée, au fond du réservoir, lorsqu'il est presque vide, si le bac est posé sur une surface inclinée

### Liste des figures

- Fig 1 : représentation schématique d'un mode préférentiel de réalisation de l'invention vu du dessus
- Fig. 2 : représentation schématique du même mode de réalisation de l'invention qu'à la Fig. 1, vu de profil selon une coupe AA'
- Fig. 3 : courbe de réhydratation dans le temps d'un sol selon son acidité
- Fig. 4 : représentation schématique de la variante comprenant au moins une couche de géotextile au fond du compartiment inférieur (2), y compris sous les éléments (7) poreux capillaires
- Fig. 5 : détail de l'implantation d'une pastille (9) de matériau poreux pour oxygénation des racines dans la cloison (4) de séparation horizontale

### Réalisations préférentielles

Un mode de réalisation préférentiel de l'invention est constitué d'un bac-conteneur (1) en matériau thermoplastique pour bac à plantes, supportant les intempéries comme l'action des ultraviolets, gel et pluie, et d'une cloison (4) de séparation horizontale, que l'on adapte autour d'élément(s) (7) poreux capillaire(s) conforme(s) à l'invention. A titre d'exemple, pour les premiers prototypes, le bac-conteneur (1) a été réalisés en PVC qui est aisé à travailler et répond bien à ces caractéristiques. Il va de soi que pour une production industrielle en grande série, on utilise préférentiellement des matières thermoplastiques moulable par injection, et plus adaptées (polypropylène, polyéthylène, et même polystyrène). Mais ce choix n'est pas limitatif, et l'homme du métier connait les matériaux aptes à constituer un bac à plantes à fond étanche.

Un autre mode préférentiel de réalisation de l'invention consiste à acquérir un bac-conteneur (1) du commerce, préexistant, et de lui ajouter une cloison (4) de séparation horizontale adaptée pour recevoir un élément (7) poreux capillaire conforme à l'invention, et cet élément (7) poreux capillaire proprement dit. Si ce bac conteneur a déjà une cloison de séparation horizontale non compatible avec l'implantation de l'élément capillaire, il convient de la modifier pour la rendre compatible ou de la retirer et de la remplacer par une cloison (4) de séparation horizontale compatible avec l'implantation de l'élément (7) poreux capillaire.

Pour la réalisation des premiers prototypes, il a été plus commode d'utiliser du PVC qui est aisé à façonner, soit par découpage de plaques et soudage ou collage, soit par moulage. Il est aussi aisé d'extruder des profilés qui seront ensuite coupés et assemblés par soudage ou collage. Une fabrication industrielle de l'invention, se ferait avantageusement par moulage de thermoplastiques par injection.

Les premiers prototypes du système de bac selon l'invention ont été réalisés avec un bac-conteneur (1) de longueur 0,5 m, et dont les autres dimensions sont 0,2 x 0,2m. Des prototypes ont été assemblés par soudage, les autres (plus nombreux) par collage. L'épaisseur des plaques de PVC utilisées a été choisie égale à 5mm (0,005 m) pour une plus grande facilité de travail des prototypes, mais elle peut être réduite à 3 ou 4 mm (0,003 ou 0,004 m), voire 2 mm (0,002 m) pour des fabrications moulées.

A sensiblement 3,5 cm du fond (0,035 m) du fond se trouve la cloison (4) de séparation horizontale entre les deux compartiments. Elle porte deux ouvertures circulaires d'environ 5,5 cm de diamètre (0,055 m) disposées symétriquement. Par chacune d'elle affleure une pierre de craie tendre du Turonien, qui se prolonge en dessous en un carré de 9 cm de côté (0,09 m), posé au fond du compartiment inférieur par l'intermédiaire d'au moins une couche de géotextile capillaire. La cloison (4) de séparation horizontale est alors constituée d'une simple plaque portant les trous nécessaire au passage des deux pierre de crie tendre dont la surface affleure, ainsi que du conduit (12) pour le remplissage du réservoir. Elle repose sur l'épaulement formé dans chacune des pierres calcaires pour réduire leur surface de contact avec la terre.

Les prototypes suivants du système de bac selon l'invention ont été réalisés selon ce second mode avec un bac-conteneur (1) en terre cuite du commerce, de longueur 0,5 m, de largeur 0,19 m et de profondeur 0,24 m. Ces bacs-conteneurs ont été étanchés soit par de l'huile de lin, soit par un vernis d'étanchéification. Les autres éléments de l'invention ont été incorporés comme précédemment, avec des dimensions légèrement adaptées.

Puis d'autres modèles ont été réalisée avec d'autres formes et dimensions de pots et jardinières en terre cuite, ayant 24 cm ou plus de profondeur intérieure, afin d'y constituer les deux compartiments superposés (2) et (3). Ceci s'effectue par la mise en place de la cloison (4) de séparation horizontale qui repose dur les épaulements des blocs de craie tendre constituant les éléments capillaires (1).

Cette cloison(4) de séparation horizontale entre les deux compartiments est avantageusement dépourvue de perforations, de manière à empêcher les racines d'aller puiser directement l'eau de la réserve, ce qui shunterait le matériau poreux et réduirait par là l'efficacité de l'invention.

Sur les prototypes en plastique, l'un des angles de la cloison de séparation entre les compartiments a été coupée à 45° sur un côté de 0,035 m et une plaque verticale coupée en biseau a été fixée verticalement entre cette cloison et le haut du bac, afin de ménager un orifice de remplissage en eau et d'observation du compartiment inférieur. Sur les prototypes en terre cuite, un conduit a été rajouté et collé verticalement sur la cloison (4) de séparation horizontale.

La cloison de séparation entre les deux compartiments étant privée d'orifices autres que celui ou ceux requis pour faire émerger le ou les élément(s) capillaire(s) poreux, il a été disposé au fond du compartiment destiné à la terre un matériau microporeux permettant cette circulation d'air. Préférentiellement, il s'agit d'un tissus de type géotextile, ajouré à l'endroit où émerge le matériau poreux, et qui remonte sur les côtés ; mais cela pourrait tout aussi bien être de la mousse compressée ou un matériau synthétique micro perforé, ou encore une couche d'un matériau poreux rigide. Préférentiellement aussi, pour éviter que ce tissu ou ce matériau poreux ne se sature en eau aux endroits où affleurent les éléments (7) poreux capillaires, il est découpé de manière à les contourner. Un second tissu ou ce matériau poreux, non en contact avec le premier, peut être implanté aux endroits où affleurent les éléments (7) poreux capillaires de manière à répartir et diffuser l'humidité.

Comme il a été dit plus haut, pour des raisons de solidité mécanique la cloison de séparation horizontale, le ou les élément(s) capillaire(s) poreux a (ont) une longueur totale inférieure à la longueur intérieure du bac.

L'étanchéité entre cette cloison horizontale de séparation peut être faite par tout moyen inerte chimiquement vis-à-vis de la terre et des plantes. Cela inclut des joints de compression en élastomère, ou des colles multi composants, ou encore des joints d'étanchéité souples en silicones que l'on laisse sécher suffisamment pour éviter tout dégagement chimique.

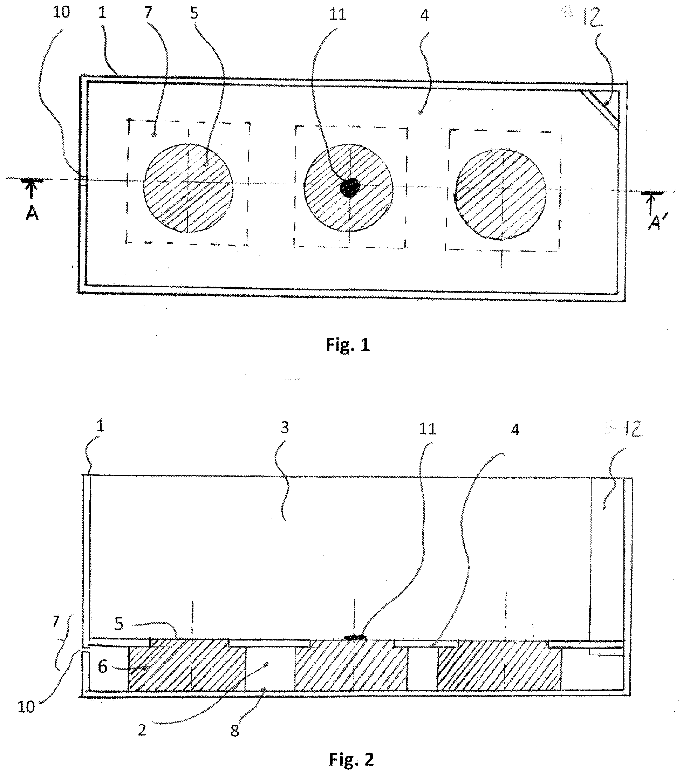

La **Fig. 1** représente cette réalisation de l'invention en vue de dessus, et la **Fig. 2** représente cette même réalisation en coupe selon l'axe AA'. Les éléments capillaires (7) en pierre calcaire sont hachurés. Le système de bac selon l'invention comporte un bac-conteneur (1) ayant un compartiment inférieur (2) adapté pour recevoir une réserve d'eau. Il est séparé du compartiment supérieur (3) apte à recevoir la terre et les plantes par une cloison (4) de séparation horizontale. Celle-ci comporte une ouverture pour chaque élément (7) poreux capillaire, lui permettant de faire remonter l'eau de la réserve jusqu'à sa surface (5) de contact avec la terre, qui affleure la surface supérieure de la cloison (4). Cette partie (5) en contact avec la terre, présente avec cette dernière une surface moins grande que la section carrée de la partie inférieure (6) dont la base est en contact avec l'eau lorsque le réservoir en contient. A gauche se trouve l'orifice (10) de trop plein pour les utilisations en extérieur. Sur l'élément capillaire du milieu, on a figuré une goutte (11) étale d'un produit étanche à l'eau (mastic de silicone par exemple) faisant obstacle à la circulation de l'humidité pour réduire la surface de contact entre l'élément capillaire considéré et la terre.

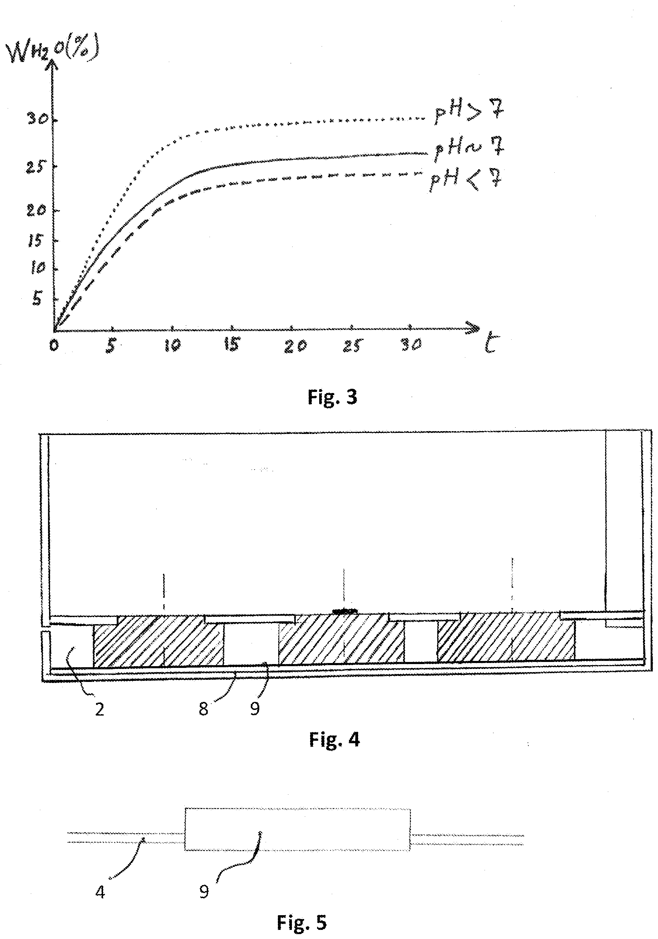

Selon une variante avantageuse représentée sur la Fig. 4, l'élément (7) poreux capillaire comporte au moins une épaisseur de tissu capillaire (9) placée entre l'élément (7) poreux capillaire et le fond (8) du bac-conteneur (1), de manière à protéger des chocs cet élément (7) poreux capillaire et à récupérer les résidus d'eau en partie basse lorsque le fond (8) n'est pas horizontal.

Les ordres de grandeur aidant à dimensionner l'invention dans chacun de ses modes de réalisation sont les suivants :
a) puisque la consommation d'eau et le déclenchement de l'autorégulation en eau dépendent du ratio entre :
   - d'une part la surface de contact entre le matériau capillaire et la terre, et
   - d'autre part le volume apte à recevoir de la terre
   Plus ce ratio est faible, plus la plante active son autorégulation hydrique et devient capable de survivre avec peu d'eau.
b) la ressource totale en eau dépend bien sûr des bien des performances du matériau capillaire pour le stockage de l'eau, mais aussi du ratio entre le volume du matériau capillaire et le volume apte à recevoir de la terre. Si le rapport du §a ci-dessus est inférieur à une valeur seuil dépendant de la nature du sol, de la plante et du climat, la plante lance son mécanisme d'autorégulation mais ne dispose pas d'assez de réserve d'eau pour avoir le temps de rendre ce mécanisme pleinement efficace avant de flétrir.

Enfin, une autre règle empirique a été relevée pour un effet technique plus net : la valeur du volume du matériau capillaire(1) massif exprimé en dm³ doit être au moins sensiblement égale à la valeur de la surface (5) de contact entre ce matériau et la terre exprimée en dm². En convertissant en m, cela donne : la valeur du volume du matériau capillaire massif exprimé en m³ doit être au moins sensiblement égale à dix fois la valeur de la surface de contact entre ce matériau et la terre exprimée en m².

Un effet secondaire de l'invention réside dans son action d'accélération de la réhydratation après un stress hydrique. Lors d'une expérimentation avec les bacs systèmes en PVC de 0,5 m x 0,2 m x 0,2m, une comparaison a été faite entre plusieurs systèmes selon l'invention ayant différents éléments capillaires et un dispositif de l'art antérieur ayant des dimensions très proches, chaque bac était planté d'un pied de tomate de taille normale (non naine) et d'un pied de tagète. Avec une réserve qui venait juste de se vider, les plantes ont subi trois journées consécutive à 35°C. Tous les pieds de tomate étaient flétris et en fin de journée un arrosage d'un demi litre au fond de la réserve de chaque système bac. Après deux heures, le pied de tomate de l'une des réalisations de l'invention avaient pratiquement récupéré, étaient bien verts et dans l'ensemble vigoureux. Les pieds de tomate plantés dans les autres modes de réalisation de l'invention ont suivi peu à peu le même devenir. Plus de 12h après, le pied de tomate planté dans un bac de l'art antérieur était toujours très flétri, et ses feuilles nettement jaunies. Il a fallu 24h pour qu'il semble avoir récupéré, mais son feuillage est resté significativement plus jaune.

Enfin, le calcaire présente du point de vue biochimique et biomécanique d'autres propriétés tout à fait avantageuses.

D'une part la petite zone terminale située à l'extrémité des racines génèrent une sécrétion acide qui tend à dissoudre des sels minéraux, et particulièrement le calcium en présence de la calcite de la craie. Ce calcium est utile au métabolisme des plantes, même si certaines plantes en ont beaucoup plus besoin que d'autres.

D'autre part l'ouvrage « Étude des sols » de Girard, Schwartz, Jabiol, ISBN 978-2-10-054021-1, Dunod 2011 expose un mécanisme naturel d'acidification des sols exposé aux pages 138 à 141 peut se résumer par :
a) lorsque les poils absorbants des racine absorbent les cations Ca⁺⁺, Mg⁺⁺, K⁺, NH₄⁺, ils libèrent des protons qui acidifient le sol
b) lorsqu'ils absorbent les anions, cela a l'effet inverse,
c) comme les pantes absorbent beaucoup plus de cations que d'anions, elles acidifient le sol, avec une intensité qui fluctue selon les circonstances
d) lorsque les fluctuations ont conduit à un pic de concentration d'anions HCO₃⁻ et NO₃⁻, ces anions sont très facilement éliminés par lixiviation avant d'avoir eu le temps de se recombiner lorsque les fluctuations varient en sens inverse

Ce mécanisme rend avantageuse l'action alcalinisante de la craie tendre poreuse.

Par ailleurs, il est connu que l'extrémité très fragile des racines doit rester en contact étroit et avec la terre, l'eau et l'air pour le fonctionnement métabolique de la plante. Mais l'alternance de périodes humides et sèches entrainent une variation dimensionnelle du sol. La dessiccation en particulier casse les radicelles et accroît les autres conséquences néfastes pour la plante. Or il est connu que ces variations sont très fortes dans les terres argileuses. A l'inverse, le calcaire participe beaucoup à la stabilité dimensionnelle.

Enfin, la dissymétrie que présente le calcaire entre une absorption rapide de l'humidité et sa restitution lente favorise la récupération après une période de sécheresse. L'ouvrage « Étude des sols » ci-dessus précise que « après un épisode de sécheresse, un sol alcalin se ré humecte significativement mieux et plus rapidement qu'une terre neutre, qui elle-même se ré humecte mieux et plus rapidement qu'une terre acide », et rappelle (Fig. 7-10 de « Étude des sols », tirée d'une Étude INRA de 2001) le graphe de la **Fig. 3** qui montre comment la réhumectation WH₂O d'une terre évolue dans le temps lors de la réhydratation, en fonction de son pH. Pénalisée par l'acidité (courbe du bas) vis-à-vis d'une terre témoin neutre (courbe du milieu), elle est au contraire favorisée par l'alcalinité (courbe du haut), à la fois en termes de rapidité et de niveau final.

Il résulte de ce qui précède que l'invention dépasse le strict cadre des éléments matériels exemplifiés ci-dessus, et constitue une approche nouvelle qui vise à faire fonctionner les plantes dans un contexte proche de celui qu'elles rencontrent dans la nature. Ceci afin que leur métabolisme puisse s'adapter tout naturellement aux changements progressifs de leur environnement hydrique.

L'invention décrit donc un système de bac à réserve d'eau pour plantes comportant un compartiment inférieur (2) apte à contenir une réserve d'eau, un compartiment supérieur (3) apte à recevoir de la terre, dans lequel l'eau monte du compartiment inférieur(2) au compartiment supérieur (3) par un dispositif capillaire exerçant une rétention d'eau à mesure que celle-ci se raréfie.

### Méthode de culture associée :

On rappelle le paragraphe a) des conclusions des expérimentations, et la contrainte d'avoir un ratio entre :
- d'une part la surface de contact entre le matériau capillaire et la terre, et
- d'autre part le volume de terre du bac
inférieur à un certain seuil.
Plus ce ratio est faible, plus la plante active son autorégulation hydrique et devient capable de survivre avec peu d'eau. Pour que cette autorégulation intervienne activement, ce rapport doit être inférieur au seuil expérimentalement observé pour chaque valeur de terre, de plantes et de climat.

Lorsque ce ratio est respecté, la plante est incitée dès sa plantation dans le système bac de l'invention à se restreindre en eau. Une période d'adaptation est donc nécessaire pendant quelques jours, et un peu plus si elle était habituée auparavant à un arrosage très généreux. Cette adaptation consiste à recevoir tous les jours un petit complément d'arrosage par le dessus. Sa quantité dépend de la tendance au flétrissage qui doit être évitée grâce à la quantité d'eau juste nécessaire. Puis le lendemain cette quantité est maintenue, et le troisième jour, elle est progressivement diminuée d'environ 15% (cette valeur devant être ajustée au juger selon le type de plante, son volume et sa tendance au flétrissage). Lorsque la plante reste vigoureuse sans apport d'un complément d'arrosage par le haut, ce dernier n'est plus nécessaire et la plante s'est adaptée à une consommation plus sobre.

Toutefois on peut choisir de continuer à verser un petit complément d'arrosage sur le dessus de la terre, tous les jours ou tous les 2 ou 3 jours, dans le but d'éviter la légère diminution de croissance qui découle de la sobriété forcée des plantes. On veillera seulement alors à réduire cet apport avant un départ de longue durée, afin de réactiver les mécanismes d'autorégulation hydrique.

## Revendications

1. Système de bac à réserve d'eau pour plantes comportant :
- un bac-conteneur (1) adapté à recevoir de l'eau et de la terre dans deux compartiments superposés, la partie inférieure de ce bac-conteneur (1) étant étanche car elle forme un compartiment inférieur(2) étanche, adapté pour recevoir de l'eau, alors que le compartiment supérieur (3) est adapté pour recevoir de la terre de culture
- une cloison (4) de séparation horizontale, placée dans le bac-conteneur (1) et constituant le fond du compartiment supérieur (3) adapté pour recevoir de la terre de culture
- au moins un élément (7) poreux capillaire plongeant dans la réserve d'eau par sa partie inférieure, et traversant la cloison (4) de séparation horizontale pour avoir à sa partie supérieure une surface (5) de contact avec la terre
- un conduit (12) permettant le remplissage de la réserve d'eau par le dessus sans mouiller la terre, dans lequel l'élément (7) poreux capillaire est constitué d'au moins un bloc massif en matériau capillaire tel que :
- il a une largeur et une longueur dans un plan horizontal égales entre elles, et au moins égales à sensiblement le double de la hauteur du bloc,
- le matériau dans lequel est réalisé ce au moins un élément (7) est poreux capillaire, et présente une dispersion des diamètres intérieurs de ses pores répartie sur une large plage s'étendant de l'échelle de la centaine de micromètres (microns) à quelques dixièmes de µm, et une tortuosité qui ralentit la circulation des fluides dans ses pores,
- l'ensemble de ce(s) au moins un élément(s) (7) poreux capillaire étant apte(s) à retenir par porosité et capillarité un volume d'eau au moins égal au soixantième du volume de terre du compartiment supérieur.

2. Système de bac à réserve d'eau pour plantes conforme à la revendication 1, dont l'ensemble de ce(s) au moins un élément(s) (7) apte(s) à retenir par porosité et capillarité un volume d'eau, retient un volume d'eau au moins égal au trentième du volume de terre du compartiment supérieur.

3. Système de bac à réserve d'eau pour plantes conforme à la revendication 1, dont le au moins un élément (7) poreux capillaire est en un matériau ayant une surface spécifique supérieure à 15m² par gramme.

4. Système de bac à réserve d'eau pour plantes selon l'une quelconque des revendications précédentes, dont le matériau de l'élément (7) poreux capillaire a une porosité ouverte au moins égale à 30%, et une distribution dimensionnelle des diamètres des pores substantiellement comprise entre la centaine de micromètres (microns) et quelques dixièmes de micromètres (microns), avec au moins 30% de pores d'un diamètre compris entre 1 et 10µm.

5. Système de bac à réserve d'eau pour plantes selon l'une quelconque des revendications précédentes, dont le matériau de l'élément (7) poreux capillaire a une surface (5) de contact avec la terre tangente au fond du compartiment contenant la terre ou en retrait dans l'épaisseur de la cloison (4) de séparation horizontale.

6. Système de bac à réserve d'eau pour plantes selon l'une quelconque des revendications précédentes, dont le matériau de l'élément (7) poreux capillaire présente une section réduite au dessus de la surface inférieure de la cloison (4) de séparation horizontale, cette section réduite constituant un épaulement sur lequel repose la cloison (4) de séparation horizontale.

7. Système de bac à réserve d'eau pour plantes selon l'une quelconque des revendications précédentes, dont la valeur du volume de l'élément (7) poreux capillaire massif exprimé en dm³ doit être au moins sensiblement égale à la valeur de la surface (5) de contact entre ce matériau et la terre exprimée en dm².

8. Système de bac à réserve d'eau pour plantes selon l'une quelconque des revendications précédentes, dont le matériau de l'élément (7) poreux capillaire apte à restituer l'eau dans le temps selon la tension de succion est du tuffeau du Turonien.

9. Système de bac à réserve d'eau pour plantes selon l'une quelconque des revendications précédentes, dont l'élément (7) poreux capillaire est réalisé en un matériau ayant un flux d'évaporation q_{ct} dont la valeur absolue est inférieure à : 2. 10-3 g/cm².h.

## Patentansprüche

1. Beckensystem mit Wassertank für Pflanzen, umfassend:
- einen Beckenbehälter (1), der geeignet ist, Wasser und Erde in zwei übereinander gelagerten Fächern aufzunehmen, wobei der untere Teil dieses Beckenbehälters (1) wasserdicht ist, denn er bildet ein wasserdichtes unteres Fach (2), das zum Aufnehmen von Wasser geeignet ist, während das obere Fach (3) zum Aufnehmen der Pflanzerde geeignet ist
- eine horizontale Trennwand (4), die im Beckenbehälter (1) platziert ist und den Boden des oberen Fachs (3) bildet, das zum Aufnehmen der Pflanzerde geeignet ist
- wenigstens ein poröses, kapillares Element (7), das mit seinem unteren Teil in den Wassertank hineinragt und die horizontale Trennwand (4) durchquert, um an seinem oberen Teil eine Kontaktfläche (5) mit der Erde zu haben
- eine Leitung (12), die das Befüllen des Wassertanks von oben ohne Befeuchten der Erde zulässt, in der das poröse, kapillare Element (7) aus wenigstens einem massiven Block aus kapillarem Material gebildet ist, wie z. B.
- es hat eine Breite und eine Länge in einer horizontalen Ebene, die untereinander gleich und wenigstens gleich bis deutlich das Doppelte der Höhe des Blocks sind;
- das Material, aus dem dieses wenigstens eine Element (7) realisiert ist, ist porös kapillar und weist eine Dispersion der Innendurchmesser seiner Poren, die über eine Breite verteilt ist, die sich in einer Größenordnung von rund hundert Mikrometern (Mikron) bis zu einigen Dutzend µm erstreckt, und eine Windung, die die Zirkulation der Fluide in seinen Poren verlangsamt, auf;
- wobei alle diese wenigstens einen porösen kapillaren Elemente (7) geeignet sind, per Porosität und Kapillarität ein Wasservolumen von wenigstens gleich dem Sechzigstel des Erdvolumens des oberen Fachs zurückzuhalten.

2. Beckensystem mit Wassertank für Pflanzen gemäß Anspruch 1, von dem alle diese wenigstens einen Elemente (7), die geeignet sind, ein Wasservolumen per Porosität und Kapillarität zurückzuhalten, ein Wasservolumen zurückhalten, das wenigstens gleich dem Dreißigstel des Erdvolumens des oberen Fachs ist.

3. Beckensystem mit Wassertank für Pflanzen gemäß Anspruch 1, bei dem das wenigstens eine poröse kapillare Element (7) aus einem Material mit einer spezifischen Oberfläche mit mehr als 15 m² pro Gramm ist.

4. Beckensystem mit Wassertank für Pflanzen gemäß irgendeinem der voranstehenden Ansprüche, bei dem das Material des porösen kapillaren Elements (7) eine offene Porosität von wenigstens gleich 30 % und eine Abmessungsverteilung der Durchmesser der Poren aufweist, die im Wesentlichen zwischen rund hundert Mikrometern (Mikron) und einigen Dutzend Mikrometern (Mikronen) inbegriffen ist, wobei mindestens 30 % der Poren einen zwischen 1 und 10 µm inbegriffenen Durchmesser aufweisen.

5. Beckensystem mit Wassertank für Pflanzen gemäß irgendeinem der voranstehenden Ansprüche, bei dem das poröse kapillare Element (7) eine Kontaktfläche (5) mit der anliegenden Erde am Boden des die Erde enthaltenden Fachs oder zurückgesetzt in der Dicke der horizontalen Trennwand (4) aufweist.

6. Beckensystem mit Wassertank für Pflanzen gemäß irgendeinem der voranstehenden Ansprüche, bei dem das Material des porösen kapillaren Elements (7) einen reduzierten Abschnitt oberhalb der unteren Fläche der horizontalen Trennwand (4) aufweist, wobei dieser reduzierte Abschnitt einen Absatz bildet, auf dem die horizontale Trennwand (4) ruht.

7. Beckensystem mit Wassertank für Pflanzen gemäß irgendeinem der voranstehenden Ansprüche, bei dem der Wert des Volumens des massiven porösen kapillaren Elements (7), ausgedrückt in dm³, wenigstens deutlich gleich dem Wert der Kontaktfläche (5) zwischen diesem Material und der in dm² ausgedrückten Erde sein muss.

8. Beckensystem mit Wassertank für Pflanzen gemäß irgendeinem der voranstehenden Ansprüche, bei dem das Material des porösen kapillaren Elements (7), das geeignet ist, das Wasser im Zeitverlauf gemäß der Ansaugspannung zurückzugeben, sandhaltiger Kreidefels des Turons ist.

9. Beckensystem mit Wassertank für Pflanzen gemäß irgendeinem der voranstehenden Ansprüche, bei dem das poröse kapillare Element (7) aus einem Material mit einem Verdunstungsfluss q_{ct} realisiert ist, dessen absoluter Wert kleiner ist als: 2. 10-3 g/cm².h.

## Claims

1. A water reserve vessel system for plants including:
- a container-vessel (1) able to receive water and soil in two superimposed compartments, the lower part of this container-vessel (1) being sealed because it forms a sealed lower compartment (2), adapted to receive water, whereas the upper compartment (3) is adapted to receive culture soil
- a horizontal partition wall (4), placed in the container-vessel (1) and making up the bottom of the upper compartment (3) adapted to receive culture soil
- at least one capillary porous element (7) dipping into the water reserve through its lower part, and passing through the horizontal partition wall (4) to have at its upper part, a surface (5) for contacting with the soil
- a duct (12) for filling the water reserve from above without wetting the soil,
wherein the capillary porous element (7) consists of at least one solid block of capillary material such as:
- it has a width and a length in a horizontal plane which are equal to each other, and at least equal to substantially twice the height of the block,
- the material of which this at least one element (7) is made is capillary porous, and exhibits scattering of the internal diameters of its pores distributed on a wide range extending from the level of approximately one hundred micrometres (microns) to a few tenths of a µm, and a tortuosity which slows down fluid circulation in its pores,
- all of this (these) at least one porous capillary element(s) (7) being able to retain through porosity and capillarity a water volume at least equal to one sixtieth the soil volume of the upper compartment.

2. The water reserve vessel system for plants according to claim 1, wherein all of this (these) at least one element(s) (7) able to retain through porosity and capillarity a water volume, retain a water volume at least equal to one thirtieth of the soil volume of the upper compartment.

3. The water reserve vessel system for plants according to claim 1, wherein the at least one capillary porous element (7) is of a material having a specific surface area higher than 15m² per gram.

4. The water reserve vessel system for plants according to any of the preceding claims, wherein the material of the capillary porous element (7) has an apparent porosity at least equal to 30%, and a size distribution of the pore diameters substantially between approximately one hundred of micrometres (microns) and a few tenths of micrometres (microns), with at least 30% of pores with a diameter between 1 and 10pm.

5. The water reserve vessel system for plants according to any of the preceding claims, wherein the material of the capillary porous element (7) has a surface (5) for contacting the soil which is tangent to the bottom of the compartment containing the soil or recessed in the thickness of the horizontal partition wall (4).

6. The water reserve vessel system for plants according to any of the preceding claims, wherein the material of the capillary porous element (7) has a reduced cross-section above the lower surface of the horizontal partition wall (4), this reduced cross-section making up a shoulder against which the horizontal partition wall (4) bears.

7. The water reserve vessel system for plants according to any of the preceding claims, wherein the value of the solid capillary porous element (7) expressed in dm³ should be at least substantially equal to the value of the surface (5) of contact between this material and the soil expressed in dm².

8. The water reserve vessel system for plants according to any of the preceding claims, wherein the material of the capillary porous element (7) able to restore water over time depending on the suction tension is Turonian tuffeau stone.

9. The water reserve vessel system for plants according to any of the preceding claims, wherein the capillary porous element (7) is made of a material having an evaporation flow rate q_{ct} the absolute value of which is lower than: 2.10-3g/cm².h.
